# EUROPEAN PATENT SPECIFICATION

(11) **EP 4 692 749 B1**
(45) Date of publication and mention of the grant of the patent: **14.10.2026**
(21) Application number: 25194166.2
(22) Date of filing: 05.08.2025
(51) Int. Cl.: G01M 3/00, G01F 23/00, G01F 23/284, G01F 23/292, G01F 23/2962, G01F 23/296, G01F 23/68, G01F 23/76, G01M 3/24, G01M 3/32, G01M 3/38, G01M 3/40

(54) **LEAK MONITORING FOR HIGH VOLTAGE CABLE TERMINATIONS**
LECKÜBERWACHUNG FÜR HOCHSPANNUNGSKABELENDVERSCHLÜSSE
SURVEILLANCE DES FUITES POUR LES TERMINAISONS DE CÂBLES À HAUTE TENSION

(30) Priority: 09.08.2024 NO 20240823
(43) Date of publication of application: 11.02.2026
(73) Proprietor: Nexans, 92400 Courbevoie (FR)
(72) Inventor: Gaspari, Roberto, 1182 Oslo (NO); Bengtsson, Karl Magnus, 0687 Oslo (NO); Hall, Matias, 1715 Yven (NO)
(74) Representative: Acapo Onsagers AS

(56) References cited:
- CN-A- 111 196 247
- CN-A- 113 588 045
- CN-B- 111 879 483
- US-A- 5 035 140
- US-A- 5 461 903
- US-B1- 9 664 553
- "A New Operation Monitor System for HV Oil Filled Termination with SAW technology ED - Darl Kuhn", IP.COM, IP.COM INC., WEST HENRIETTA, NY, US, 15 August 2017 (2017-08-15), XP013175620, ISSN: 1533-0001

## Description

### FIELD OF THE INVENTION

Aspects relate to systems and methods for monitoring leakage of an insulating fluid from a termination device of a high voltage cable connection.

### BACKGROUND

Insulating fluid, typically silicon oils or other oils, are used in termination devices for high voltage cable connections to insulate internal components. Without the insulating fluid, the internal components may be exposed, and this may result in a breakdown of the termination device. In extreme examples, such a breakdown can be dramatic, and may cause damage to the termination device and surrounding area. The termination device may have to be taken out of service for repairs, resulting in unwanted, costly downtime of the cable. Such a breakdown may occur if a leak occurs in the termination device. The insulating fluid may slowly drain from the termination device. In some termination devices, leaks are identified using pressure sensors that sense the pressure of the insulating fluid within the termination device. A drop in pressure may indicate a leak.

However, pressure is not a good way to identify leaks within a termination device. Pressure varies within the termination device for reasons other than a leak of insulating fluid, and such variations are greater than would be caused by a leak. For example, pressure variation may be caused by vapours above the fluid surface being heated, either externally from the sun or internally due to cable connection. As a result, it is difficult to identify leaks accurately, and there is therefore a risk of breakdown of the termination device due to a leak not being identified.

In the prior art, the document CN113588045A discloses a system for monitoring the oil level of a termination device for high voltage cables based on ultrasonic ranging.

### SUMMARY OF THE INVENTION

The present invention is defined by the appended claims and in the following: According to a first aspect, there is provided a system for monitoring leakage of an insulating fluid from a termination device of a high voltage cable connection, as defined in claim 1.

Such a system provides improved monitoring of a termination device containing an insulating fluid to enable leaks and/or low levels of the insulating fluid to be identified. Termination devices, which may be referred to as terminations, are typically sealed systems, so a reduction in a level of an insulating fluid during normal operation is most likely to be caused by a leak. Monitoring a level of the insulating fluid, which may be referred to as the insulating fluid level or, more simply, the fluid level, provides a more direct and reliable measure of the insulating fluid within a termination device than pressure-based monitoring. This enables leakages to be identified quickly and efficiently. Identifying a leak quickly means that damage to the cable and termination device may be reduced or avoided, and thus potential outages or down-time of the cable are also reduced. Maintenance can be scheduled and performed more efficiently. Damage or breakdown of a termination device due to exposure of the cable connection therein can result in lengthy downtime for the cable connection, typically in the region of between 6 and 8 weeks. In comparison, repairing a leak may take a maximum of 3 days. Downtime can cause severe inconvenience as well as high costs for operators, whose lost income for each day of downtime may be in the region of €500,000.

The insulating fluid may be an oil-based insulating fluid. The insulating fluid may comprise or consist of a silicon oil. The high voltage cable connection may be an AC or a DC cable connection. The cable connection may comprise a single high voltage cable or a link or join between two high voltage cables. In some examples, the cable connection may comprise a link or join between more than two high voltage cables.

The sensor may be a single sensor or may form part of a sensor array. The parameter measured by the sensor may be dependent on the type of sensor being used and the arrangement of the sensor within the termination device. The parameter is a parameter that can be used to determine the fluid level within the termination device.

The sensor may be suitable for or configured for mounting or attaching to a housing or body of the termination device. The high voltage cable connection may extend through the termination device, and particularly through the housing of the termination device. An internal volume of the housing through which the high voltage cable connection extends will be filled with an insulating fluid, in use. The sensor may be attached to an outside of the housing, to an inside of the housing, or may extend through a wall or plate, such as a top or bottom plate, of the housing so that it is in fluid communication with the internal volume of the housing.

The sensor may be powered by an external power source or by a cable of the high voltage cable connection. The system may comprise the external power source for powering the sensor. The external power source may also power the controller. The system may comprise a transformer for drawing power from the cable to power the sensor. The transformer may comprise a toroidal transformer. The transformer may also power the controller.

The controller may be connected to the sensor by a wired connection or by a wireless connection. The system may comprise a wireless transmitter for transmitting data from the sensor to the controller. The system may comprise a wireless receiver for receiving data from the sensor at the controller. A plurality of sensors may be provided and the controller may be configured to utilize measurements from one or more of the sensors. Accordingly, references to a or the sensor may be read as references to 'at least one sensor' or to 'one or more sensors'.

The controller may be configured to cause the sensor to measure the parameter. The sensor may automatically measure the parameter and provide the output to the controller. The sensor may measure the parameter at a predetermined measurement frequency. The controller may obtain measurements from the sensor. The controller may determine the fluid level at the predetermined measurement frequency or at another regular interval. This may enable monitoring of the fluid level over time, providing more insight into levels of the insulating fluid and enabling leaks to be identified early or predicted.

The controller may receive the measurements indirectly from the sensor. The measurements may initially be received by a different module or device, which may provide the measurements to the controller. The measurements may be stored in storage or memory and the controller may retrieve the measurements from the storage or memory.

The system may further comprise a pressure sensor. The controller may be configured to receive pressure measurements from the pressure sensor and use the pressure measurements in combination with the parameter measurements from the sensor to determine the fluid level or to take other action. For example, pressure measurements and the sensor parameter measurements may be used by the controller to independently identify whether a leak is present. Further action may be taken by the controller if the controller determines from both the pressure measurements and sensor parameter measurements that a leak is occurring.

The controller may be connected to a memory. The system may comprise the memory and/or the memory may be remote from the system. The controller may be configured to store the determined fluid level in the memory. The controller may store the measurement of the parameter associated with the determined fluid level, a timestamp, and/or other data gathered about the termination device in the memory in addition to the determined fluid level.

The controller may comprise a processor and internal memory. The internal memory may store instructions that, when implemented by the processor, cause the controller to perform the steps of a method as described herein. In some systems, the controller may be provided separately to the sensor.

The controller may be configured to determine whether there is a leak in the termination device. In response to determining that there is a leak in the termination device or that a leak has occurred, the controller may perform a further action. In response to determining that there is or has been no leak, the controller may continue monitoring the termination device without taking further action.

The controller may be configured to determine that the level of the insulating fluid is below a threshold level. If the level of the insulating fluid is below the threshold level, the controller may be configured to determine that there is a leak in the termination device. Upon determining that the level of the insulating fluid is below the threshold level, the controller may be configured to perform at least one of: transmitting a signal for informing an operator; causing a power flow through the cable to be interrupted; or causing insulating fluid to be automatically supplied into the termination device.

Monitoring the level of the insulating fluid in this way allows for actions to be performed in response to a level of the insulating fluid being too low or becoming lower, as indicated by a threshold level. A low level of the insulating fluid may indicate that a leak has occurred or is occurring. Fluid level is a more direct measure than pressure, and is less likely to be influenced by outside factors. Accordingly, fluid level monitoring and comparison of fluid level with a threshold may be a more accurate measure of whether a leak has occurred or is occurring.

The fluid level may be compared to the threshold level, to determine whether the fluid level is below the threshold level.

A plurality of threshold levels may be provided. A different signal may be sent depending on which threshold level or levels the fluid level is below. The fluid level may be compared to each of the plurality of threshold levels to determine whether the fluid level is below one or more of the thresholds. Each threshold may have a different associated action. For example, when the fluid level is below a first threshold level, a signal may be sent to the operator, and when the fluid level is below a second threshold level that is lower than the first threshold level, the controller may cause the power flow to be interrupted.

The signal, which may be referred to as an alarm signal or an information signal, may be for alerting the operator that the fluid level is below the threshold. The signal may include an indication of the fluid level. The signal may also or alternatively include an indication of the threshold level below which the fluid level is determined to be. The signal may be for alerting the operator that oversight is required and may not include the fluid level or the threshold. The controller may be configured to send different signals depending on the fluid level and/or which threshold levels the fluid level is below. The signals may have differing levels of severity and/or may be sent to different operators or locations. The signal may include a value for the fluid level.

The signal may be transmitted to a remote system. The remote system may be associated with the operator. The signal may be transmitted directly or indirectly to the remote system. The signal may cause the remote system to display or audibly output a warning to the operator. The signal may be an electronic message, such as an SMS message, an email message, or a message through a messaging service. The operator may then be able to take one or more actions, such as interrupting the flow of power through the cable, scheduling maintenance, or activating a pump to provide more insulating fluid into the termination device. The signal may be a signal to an operating system that schedules maintenance of the cable.

The controller may be configured to cause power flow to be automatically interrupted. The controller may be in communication with a switching device of the cable or wider power network, and may be configured to operate the switching device in response to determining that the fluid level is below the threshold level. Interrupting power flow in this way may protect the termination device from damage should the fluid level be too low for safe operation. While this may result in some downtime and cost for the cable and the network, this is a reduction in downtime and cost compared to what would have been required should damage have occurred to the termination.

The controller may be configured to cause the insulating fluid to be automatically supplied to the termination device. This may be referred to as activating an autonomous refill. A tank may be connected to the termination device and a pump, valve, or other actuator may be operated by the controller to provide more insulating fluid into the termination device. In some examples, autonomous maintenance may be performed using, for example, a drone. Autonomous maintenance may be combined with interrupting the flow of power, to avoid shorting.

Causing the power flow through the cable to be interrupted may be referred to as interrupting the power flow through the cable, when initiated directly by the controller, i.e. by controlling a switch. Causing insulating fluid to be automatically supplied into the termination device may be referred to as automatically supplying the termination device with insulating fluid, when initiated directly by the controller. These steps may be performed indirectly, such that the controller sends a control message indicating an action to be taken and another controller or component of the system or of another system implements the action.

According to the invention, the controller is configured to: determine the level of the insulating fluid at a first time and a second time that is different to the first time; and determine a rate of change of the level of the insulating fluid based at least in part on the level of the insulating fluid at the first time and the level of the insulating fluid at the second time. Determining a rate of change enables fluid level to be monitored over a time period. This may enable a leak to be identified and may enable the leak to be quantified. This may enable improved maintenance scheduling. The first and second times may be consecutive times at which a measurement is performed by the sensor or may be separated by other measurements. The first time may be an initial level of the insulating fluid, which may be measured during installation by the sensor or by an operator and stored for subsequent use by the controller.

The fluid level may be determined at further times and the rate of change may be determined based on the fluid level at those further times and/or further rates of change may be determined between those further times.

The rate of change of the fluid level may be provided to a display for display to an operator. The rate of change may be analysed by the controller. The controller may identify a leak, based on the determined rate of change. For example, the rate of change may indicate that the fluid level is decreasing, and a leak may be identified based on this. The controller may be configured to determine a severity of the leak based on the rate of change. The controller may communicate that a leak has occurred to the operator and/or may communicate a severity of the leak to the operator.

The controller may be configured to determine a future time at which the level of the insulating fluid will be below a threshold level based on the rate of change of the level of the insulating fluid. Determining a future time at which the fluid level will be below a threshold fluid level is useful for predicting a maintenance requirement. The termination device may have a threshold fluid level above which the cable can safely operate, so it is useful to be able to predict when the cable will be no longer able to safely operate. The future time will be a time after the first and second times. The future time may be determined by regression or by using a machine-learned model.

The future time may be provided to an operator using a signal emitted by the controller. The signal may be provided to a display for displaying the future time to an operator, or may otherwise be communicated to the operator via the signal.

At the future time, the controller may be configured to determine the fluid level and/or may be configured to perform an action such as those described above, including sending a further signal to the operator, causing an interruption to the flow of power through the cable, or causing an automatic refilling of the insulating fluid.

The controller may be configured to determine that the rate of change of the level of the insulating fluid is above a threshold rate of change. Based on determining that the rate of change of the level of the insulating fluid is above a threshold rate of change, the controller may be configured to perform a further action, such as at least one of: transmitting a signal for alerting an operator; causing a power flow through the cable to be interrupted; or causing insulating fluid to be automatically supplied into the termination device, which are also described above.

The rate of change of the level of the insulating fluid may be compared to a threshold. A rate of change of the level of the insulating fluid being higher than the threshold rate of change may indicate a leak.

There may be provided a plurality of threshold rates of change of fluid level. Each threshold rate may be associated with a particular severity of leak. A severity of the leak may be determined based on which threshold is exceeded by the rate of change of fluid level.

The sensor may be an active sensor. Active sensors output a signal and determine a measurement based on the output signal. Active sensors may be influenced less by external factors than passive sensors, which do not output a signal and instead use passive measurements. Active sensors can therefore be used to more accurately determine fluid level and leaks in the present solution. Active sensors may be used to directly measure the fluid level or may be used to indirectly measure the fluid level.

The sensor may be configured to emit a signal and receive a reflection of the signal from a surface of the insulating fluid for measuring the parameter. Reflecting a signal from the surface of the insulating fluid provides a direct measure of the fluid level relative to the sensor. The fluid level within the termination device may therefore be determined.

The parameter may be a time for the signal to be transmitted and received from the surface. The parameter may be a distance between the sensor and the fluid level determined based on a time for the signal to be transmitted and received.

The sensor may be configured to emit the signal through the insulating fluid to the surface or through a gas above the fluid surface to measure the parameter.

The system may comprise an element configured to float in the insulating fluid. The element may be for use by the sensor for measuring the parameter. The element, which may be referred to as a floating element, may provide improvements in how the fluid level is determined. The fluid level may be subject to transient changes, due to, for example, waves or vaporisation at the surface. Accordingly, an element floating within the insulating fluid may provide an improved surface from which the sensor can measure the parameter.

The sensor may be configured to emit a signal towards the element and to receive a reflection of the signal from the element. A time between emission and receipt of the signal by the sensor may be used to determine a position of the element, and therefore a level of the insulating fluid. A calibration process may be performed to map positions of the element to levels of the insulating fluid and a mapping produced. The mapping may be consulted and a level of the insulating fluid determined based on the determined position of the element.

The element may be considered to be an indicator of or representative of the insulating fluid surface, and can be used as a proxy for determining the fluid level. Accordingly, it may be said that the sensor is configured to emit a signal and receive a reflection of the signal from a surface of the insulating fluid or from a surface representing the surface of the insulating fluid.

The element may have an annular longitudinal section for surrounding the high voltage cable connection within the termination device. The element may have an interior diameter that is greater than the cable but smaller than a stress cone of the cable. An outer diameter may be less than a diameter of the interior of the termination device. This allows the element to sit on the stress cone when the fluid level is below the stress cone or prior to filling the termination device with insulating fluid. The element may be formed from a dielectric material. The element may be formed in two halves that can be connected or joined together around the cable when the termination device is being formed. The element may define or delimit one or more channels therein for providing suitable buoyancy within the insulating fluid for the element. The channels may extend radially around at least a portion of the element. Where the element is formed in two halves, the channels may extend radially around a part of each half, being closed at each end to prevent insulating fluid ingress into the element. The channels may have a coating of conductive material to reduce discharge or erosion within the channels due to the electrical field of the termination. The element may comprise or delimit a plurality of voids for providing said suitable buoyancy. The voids may be microvoids. The element may comprise a foamed material for forming said voids. The voids and/or channels sealed within the element to prevent the insulating fluid from entering them.

Rather than receiving a reflection from the element, the element and sensor may be arranged so that the element prevents an emitted signal from reaching a receiving element of the sensor. The sensor may comprise a plurality of emitting devices and a plurality of corresponding receiving devices. Signals emitted from the emitting devices may be received by the receiving devices. The element may be configured to break the signals, preventing at least some of the receiving devices from receiving their signal. The emitting and receiving devices, and the element, may be arranged so that changes in the fluid level within the termination device cause changes in how many of the signals from emitting devices are prevented from reaching the corresponding receiving devices by the element. Accordingly, the number of devices that are prevented from receiving the signal by the element may correspond to a fluid level, because as the fluid level decreases, the position of the element changes, meaning fewer signals may be interrupted.

In such a scenario, the element may be at least partially provided within a sealed volume, so that insulating fluid does not interrupt the signals. The system may comprise a housing for the element and the sensor. The housing may be for mounting to the termination device, such that it extends from the termination device. The housing may be mounted to a fill-hole of the termination device. The element may be provided to extend through the fill-hole or another hole in the termination device such that part of the element is in contact with the insulating fluid and part of the element is provided externally from it within the housing. Movement of the element within the housing may interrupt one or more of the signals emitted by the emitting devices of the sensor.

Such elements may be used to determine when a pressure within the termination is too high. When a pressure within the termination increases, the element's position may change so that it floats higher in the insulating fluid or within the termination device in general. This may be to changes in the buoyancy within the element caused by channels, voids, or other gas pockets. The controller may be configured to determine a position of the element. The position of the element may be compared to a threshold level corresponding to a too-high pressure level. If the pressure level is determined to be too high, a signal may be transmitted by the controller, or the controller may cause the power flow to be interrupted or the pressure to be changed via a valve, for example.

The sensor may be configured to emit a signal comprising at least one of: an acoustic signal; a radio wave signal; a laser signal; or a visible light signal. Such signals may be emitted and reflected or interrupted to allow a fluid level to be determined. As the insulating fluid is sealed within a housing of the termination device, noise due to light, sound, or electromagnetic waves may be low. As a result, the sensors may be relatively low power, as a signal-to-noise ratio may be high, and/or there may be improved accuracy. Sound waves or radio waves or light may be directed towards the surface and reflected. A laser signal may be used to perform collimation, whereby two laser beams are moved until they collimate. An angle between the laser beams may be determined to identify a distance to a surface at which they collimate.

The sensor may be configured to emit a vibration signal into a body of the termination device for measuring the parameter.

A sensor may be configured to emit vibration signal into a body or housing of the termination device and may be configured to determine a natural frequency of the body of the termination device based on the emitted signal. The sensor may therefore be referred to as a vibration sensor. The natural frequency may change dependent on the fluid level, and so the fluid level may be determined by the controller based on a correlation between fluid level and natural frequency. A vibration sensor can be attached to an exterior of the termination device.

The sensor may be configured to measure a thermal characteristic of the termination device for measuring the parameter. Thermal transmission may be different along a length of the termination device between portions where insulating fluid is in contact with body or where insulating fluid is not in contact with the body. A sensor may be configured to scan the termination device from an exterior and determine surface temperatures of the termination device. The fluid level may be determined based on where the determined surface temperatures are different. The sensor may be a thermal camera, such as an infrared camera, for example.

According to a second aspect, there is provided a termination device comprising a system as described above, as defined in claim 11.

The sensor may be mounted to a base of the termination device. The termination device may have a base plate. The sensor may be mounted to the base plate. The sensor may be provided on or through the base plate of the termination device. Providing the sensor at the base of the termination device, where the cable will be grounded, allows the sensor to be connected to an external power supply, and provides easy access to repair and maintenance of the sensor. Furthermore, minimal adaptation of the design of the termination device may be required. The influence of an electromagnetic field of the termination device on the sensor may also be less.

The sensor may be mounted at a top of the termination device. The termination may comprise a top plate. The sensor may be mounted to the top plate. The sensor may be provided through or on the top plate of the termination device. Providing the sensor at a top of the termination device may enable improved measurement because the measurements may be less affected by the presence of the stress cone, centring ring, or compression tapes. The sensor may draw power from a cable of the high voltage cable connection. For example, the sensor may be connected to a toroidal transformer that is around the cable extending from the top of the termination device. The sensor may also include or be connected to a wireless communication means, to avoid grounding the cable. The sensor may be placed into a fill-hole of the termination device, such that it seals the fill-hole. The fill-hole may be for filling the termination device with the insulating fluid. In this way, the sensor may be used instead of a plug for the fill-hole. The fill-hole may be in a top place of the termination device.

The sensor may be placed in a drain-hole of the termination device, such that it seals the drain-hole. The drain-hole may be for draining insulating fluid from the termination device. The drain-hole may be in a base plate of the termination device. The sensor can therefore be used instead of a plug.

The sensor may be fitted to a new termination device or may be retro-fitted to an existing termination device. The termination device may be drained of insulating fluid prior to fitting the sensor, and may be refilled after the sensor has been attached.

The sensor may be attached to a side of the termination device or may be directed towards a side of the termination device.

According to a third aspect, there is provided a method for monitoring a leakage of an insulating fluid from a termination device of a high voltage cable connection, as defined in claim 14.

Features relating to the system and the termination device described above may also apply to the method.

There may be provided a computer program product and/or a computer readable media having instructions, that when implemented by a computer, cause the computer to perform the method described above. There may be provided a high voltage cable connection comprising a termination device as described above.

### BRIEF DESCRIPTION OF THE DRAWINGS

In the following description this invention will be further explained by way of exemplary embodiments shown in the drawings:
Fig. 1 is a schematic diagram of a system for determining a level of an insulating fluid within a termination for a cable.
Fig. 2 is a flow chart of a method for determining a level of an insulating fluid within a termination for a cable.
Fig. 3 is schematic diagram of a first arrangement of a termination and a sensor.
Fig. 4 is a longitudinal section of a floating element for use within a cable termination
Fig. 5 is a schematic diagram of a second arrangement of a termination and a sensor.
Fig. 6 is a schematic diagram of a third arrangement of a termination and a sensor.
Fig. 7 is a schematic diagram of a fourth arrangement of a termination and a sensor.

### DETAILED DESCRIPTION

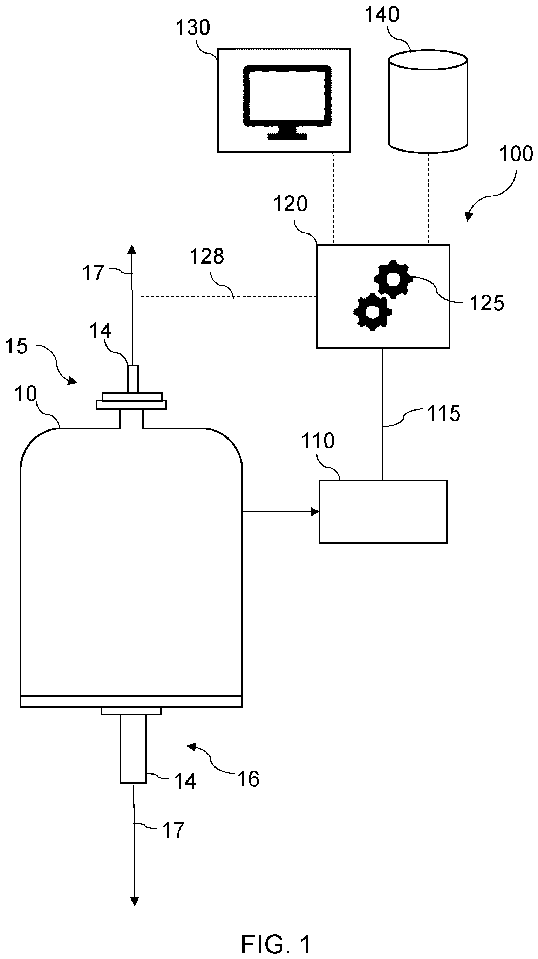

Fig. 1 shows a termination device 10 and a system 100 for monitoring leakage of an insulating fluid from the termination device 10. A high voltage cable connection 14 extends through the termination device 10, from a first side 16 of the connection 14 at a bottom of the termination device 10 to a second side 15 of the connection 14 at a top of the termination device 10. The first side 16 may be a lower voltage side and the second side 15 may be a higher voltage side. A cable, with differing layers of insulation, is provided within the termination device 10 and is connected to a metallic conductor to form the cable connection 14. The cable connection 14 also includes other components such as a stress cone for shaping the electrical field of the cable within the termination device 10 (these elements are not shown in Fig. 1, but can be found in later figures). The cable connection 14 connects to a wider power network 17 to enable power transmission. Other types of cable connection may be provided within the termination device.

The insulating fluid within the termination device 10 insulates the cable connection 14, to prevent arcing and the resultant damage that such an arc may cause. The insulating fluid may be or comprise an oil, for example. Leakage of the insulating fluid may lead to arcing, and therefore damage. Termination devices 10 are well sealed to attempt to prevent any leakage, but leakage can still occur, and it is useful to enable detection of such leaks so that they can be rectified efficiently and safely, before there is the potential for damage to the termination device.

In Fig. 1, the system 100 is provided to monitor the termination device 10 so that leaks can be identified. The system 100 is configured to monitor a level of the insulating fluid within the termination device 10. Detecting the level of the insulating fluid enables direct identification of possible leakage, in contrast to other methods for detecting leaks which are more indirect and subject to noise or inaccuracies.

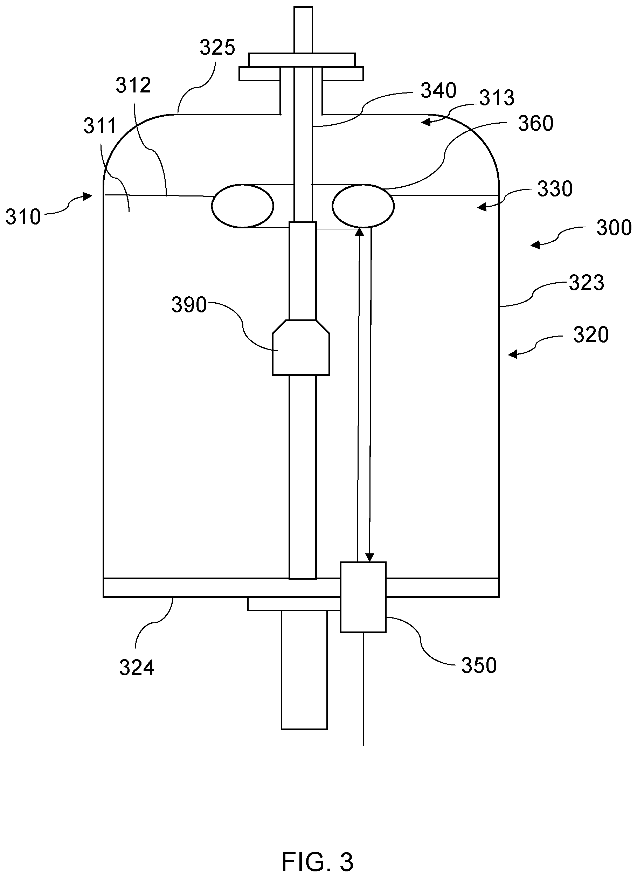

The system 100 comprises a sensor 110 and a controller 120. The sensor 110 is arranged to measure a parameter of the termination device from which the level of the insulating fluid can be determined. The parameter may differ depending on the type of sensor used. Different sensor types and parameters that they are configured to measure are discussed below in relation to Figs. 3 and 5 to 7.

Still referring to Fig. 1, the controller 120 is configured to receive one or more measurements of the parameter from the sensor 110, along a wired or wireless connection, depicted in Fig. 1 by the line 115. Using the measurements, the controller 120 analyses the measurements as depicted with number 125 in Fig. 1. The controller 120 determines a level of the insulating fluid within the termination device 10 based on the measurement received from the sensor 110.

The system 100 further comprises a storage device 140 providing memory in which the controller 120 stores determined levels, a time at which the level was determined, as well as measurements received from the sensor 110. The controller 120 may access the memory to perform analysis or comparison based on determined levels.

The controller 120 uses the level of the insulating fluid to monitor the termination device 10. The controller 120 determines whether there is a leak in the termination device 10 based on the level of the insulating fluid. The controller 120 can determine whether there is a leak in several ways, including by comparing the level to a threshold level or by determining a rate of change of the insulating fluid and comparing the rate of change to a threshold rate of change. Thresholds may be stored in the storage device 140 and retrieved by the controller 120 for comparison.

Based on the determined level, the controller 120 may be able to perform further actions. The controller 120 may output a signal to a display 130 of the system for alerting an operator. The display 130 may be part of a remote system. The controller 120 may be connected by a wired or wireless connection 128 to a switching device or other control apparatus of the power network 17 and may automatically interrupt the flow of power through the power network 17. The controller 120 may cause automatic refilling of the termination device 10 from a storage tank of insulating fluid or using drones.

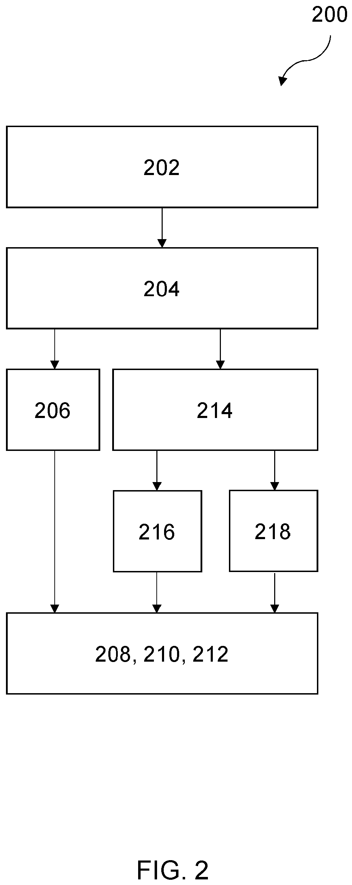

Fig. 2 shows a method 200 performed by a controller, such as the controller 120, as it monitors a termination device, such as termination device 10. The method 200 includes, at step 202, receiving at least one measurement of the parameter of the termination device from the sensor. At step 204, the method 200 includes determining a level of the insulating fluid within the termination device based on the at least one measurement. The at least one measurement may comprise a single measurement or a plurality of measurements. A single level may be determined in step 204 based on a single measurement. Alternatively, an average level may be determined based on several measurements or a plurality of levels of the insulating fluid may be determined based on measurements at different times.

Fig. 2 shows two branches after step 204, which represent the determination of whether a leak has occurred or is occurring. One or both branches may be performed by a controller. Subsequently, if a leak is identified, one or multiple of steps 208, 210, 212 may be performed, which represent actions performed by the controller in response to identifying a leak.

In the left-hand branch, at step 206, the method 200 includes determining that the level of the insulating fluid is below a threshold level. Step 206 may include retrieving one or more threshold levels from a memory, comparing the level of the insulating fluid to the one or more threshold levels, and determining whether the insulating fluid is below a threshold level based on the comparison.

Upon determining that the insulating fluid level is below the threshold level, a further action may be taken. The further actions can include one of step 208 of transmitting a signal for informing or alerting an operator, such as to the display 130 in Fig. 1, step 210 of causing a power flow through the cable to be interrupted, and step 212 where insulating fluid is automatically supplied to the termination device to bring the level of the insulating fluid back to a safe level.

In the right-hand branch, steps 214, 216, and 218 are shown. The right-hand branch relies on two levels of the insulating fluid being determined or retrieved. One level may be a preset level of the insulating fluid such as may be set at installation and one level may be determined in step 204, or both levels may be determined in step 204. The levels are from different times. Subsequently, at step 214, the method 200 includes determining a rate of change of the level of the insulating fluid based at least in part on the levels of the insulating fluid.

The rate of change of the level may be compared to a threshold rate of change at step 218, and in response to determining that the rate of change of level is below the threshold rate of change, a further action such as one or more of steps 208, 210, and 212 may be performed.

Alternatively, or additionally, the rate of change of the level may be used to predict a future time at which the level of the insulating fluid will fall below a threshold level, at step 216. A further action may be taken upon this determination, such as step 208 to inform or alert the operator of the future time, or at the future time, such as alerting the operator that the level has fallen below the threshold level, to interrupt the power flow or to automatically refill the termination device. The method may also include determining the level again at the future time to check whether there has been the predicted change and to determine what action to take.

The method 200 may be performed regularly to enable monitoring of the termination device over a period of time. If no leak is determined in the branches containing step 206 and steps 214, 216, and 218 respectively, then the method may return to step 202. In some examples, a signal, such as in step 208, may still be sent to the operator to inform them of the determined level or rate of change, or that there is no leak detected. Data relating to the determined levels, rates of change, times, measurements, and detected leaks may be stored in a storage device, such as storage device 130.

Fig. 3 shows a termination device 300, which may be used as the termination device 10 in Fig. 1, and a sensor 350, which may be the sensor 110 of Fig. 1, of a system such as the system 100. The termination devices depicted in Figs. 1, 3 and 5 to 7 are schematic representations for the purposes of explaining the aspects of the present disclosure only. Termination devices incorporating or used with the aspects and techniques described herein or for which the aspects and techniques described herein are designed for use with may have any form. For example, a plurality of porcelain or other ceramic insulators in the form of discs may be provided around a termination device in reality, although they are not shown here.

An interior of the termination device 300 is shown schematically to aid description of how the sensor 110 measures a parameter to enable determination of a level 310 of the insulating fluid 311 within the termination device 300. The termination device 300 has a housing 320. The housing 320 has a wall 323 extending between a base plate 324 at a bottom of the termination device 300 and a top plate 325 of the termination device 300. The housing 320 defines a sealed internal volume 330.

A cable connection 340 extends through the termination device 300. The cable connection 340 passes through the bottom plate 324, where it is sealed against the bottom plate 324 to prevent fluid exiting the volume 330, through the internal volume 330, and through the top plate 325, where it is sealed against the top plate 325 again to prevent fluid escape. The cable connection 340 has varying levels of insulation and includes a rubber stress cone 390 for shaping the field of the cable.

To insulate the cable connection 340 and prevent arcing, the internal volume 330 is filled with an insulating fluid 311. The insulating fluid 311 has an insulating fluid level 310, which is its level within the internal volume 330. The insulating fluid level 310 may be measured as a level at which a surface 312 of the insulating fluid sits. A gap 313 is left above the insulating fluid 311 to allow for vaporisation of the insulating fluid and to allow for safe variations in pressure within the termination device 300.

As described in relation to Figs. 1 and 2, it is useful to determine a level of the insulating fluid 311 within the termination device 300. To enable such determination, a sensor 350 is provided along with an element 360. The sensor 350 is mounted to the termination device 300 through the bottom plate 324. The sensor 350 therefore extends into the internal volume 330 and is in contact with the insulating fluid 311.

The sensor 350 is an ultrasound sensor, but may be a different acoustic sensor in other examples or may be a different type of sensor, such as an optical sensor that makes use of laser signals or visible light signals, or a radio wave sensor such as radar. The sensor 350 emits a signal into the insulating fluid 311 to measure a parameter that can be used to determine the level 310 . The sensor 350 is therefore an active sensor.

The sensor 350 is powered by an external power source (not shown) and is connected to a controller such as controller 120 to provide measurements.

The sensor 350 is arranged to emit a signal towards the top plate 325 and therefore towards the surface 312 of the fluid 311. The sensor 350 is configured to emit the signal and to receive a reflection of the signal. A time between emission of the signal and receipt of the reflection may be measured by the sensor as the parameter. Based on the time between emitting the signal and receiving the reflection of the signal, the level 310 can be determined. The speed at which the signal emitted by the sensor 350 travels through the insulating fluid may be known and can be used to work out a distance travelled by the signal between the sensor 350 and where the signal was reflected from. The level within the termination device can then be determined, either as the distance between the sensor and the reflection point or another reference point of the termination device, based on a known location of the sensor within the internal volume 330.

In Fig. 3, the element 360 is provided to reflect the signal emitted by the sensor 350. The element 360 floats within or on the insulating fluid 311. The element 360 provides surface from which to reflect the signal from the sensor 350. The surface may provide a better reflection, with less noise, than the surface 312 of the insulating fluid 311 as it is a solid surface rather than a liquid interface with a vapour, as would be present in the gap 313.

The element 360 therefore provides a representation or an indication of where the surface is. A calibration may be performed prior to installation of the termination device 300 or during installation to map positions of the element 360 to levels of the insulating fluid 311, based on sensor measurements.

The element 360 has an annular longitudinal section, and is positioned within the termination device so that it surrounds a cable of the cable connection 340. The element may have an inner diameter that is larger than that of the cable but less than the stress cone 390 so that it sits on the stress cone when the insulating fluid level is below the stress cone, which may provide benefits during manufacture.

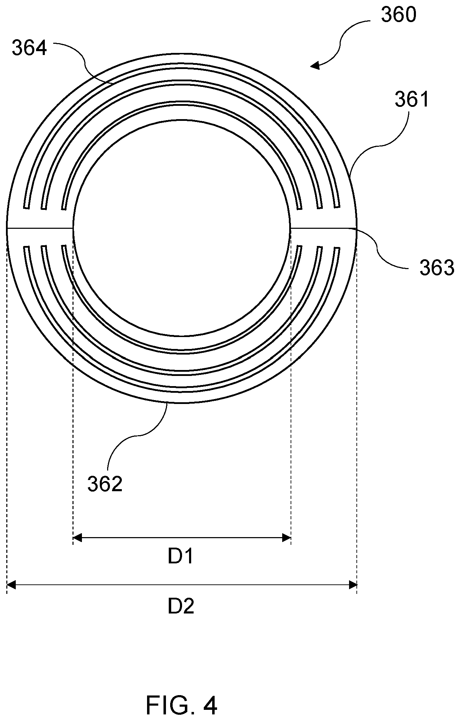

Fig. 4 shows the element 360 schematically as a top view. The element is formed of a dielectric material. The element 360 has two halves 361 and 362 which each form half an annulus in their longitudinal sections. Cross-sections of the element, as shown in Fig. 3, are substantially circular or ovoid, although in examples they may be rectangular or have other shapes. The halves 361, 362 are joined together at their ends 363 to form the element 360. Providing halves 361, 362 enables the element 360 to be fitted around the cable connection 340 in a straightforward manner, allowing it to be retrofit as well as provided to new termination devices.

Each half 361, 362 includes a plurality of channels 364 that are sealed within the halves 361, 362 for providing buoyancy. The channels 364 may be air-filled or may be filled with another gas or liquid to provide a desired buoyancy within the insulating fluid 311. The element has an inner diameter D1 and an outer diameter D2. The outer diameter D2 is smaller than a diameter of the termination device 300. The inner diameter D1 is greater than a diameter of the cable connection 340 above the stress cone 390 and smaller than a diameter of the stress cone 390, so that the element 360 can rest on the stress cone 390 during installation and when the insulating fluid falls below the stress cone 390.

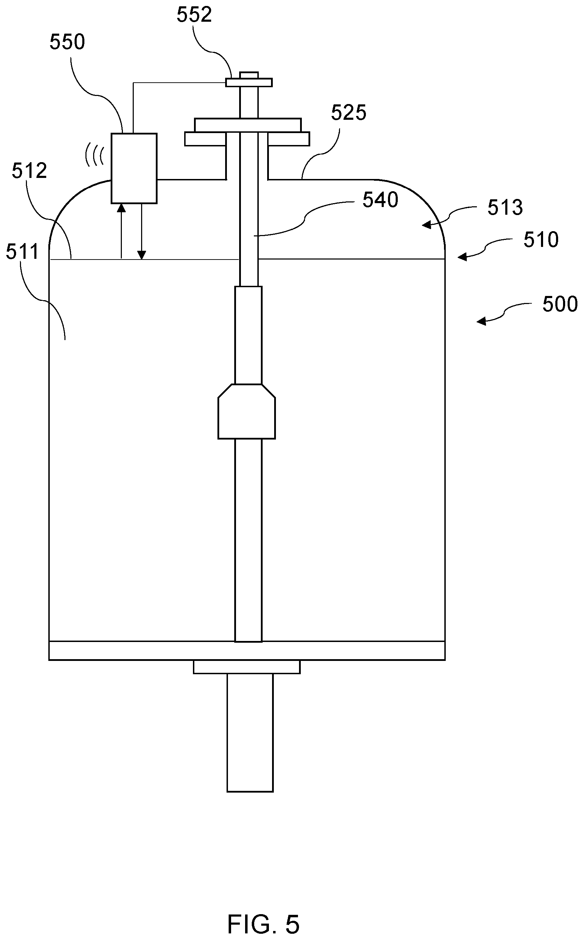

Fig. 5 shows an alternative arrangement of a termination device 500, which may be used as the termination device 10 in the arrangement shown in Fig. 1. The termination device 500 has the same features as the termination device in Fig. 3. In Fig. 5, a sensor 550 is provided through a top plate 525 of the termination device 500. The sensor 550 is, once again, an ultrasound sensor, although may be another type of sensor as described above. The sensor 550 is directed towards a surface 512 of insulation fluid 511 within the termination device 500, and is configured to emit a signal down towards the surface 512 and to receive a reflection from the surface 512. The signal is transmitted to the surface 512 across the gap 513 above the insulating fluid 511. The gap 513 may be gas-filled and may include some vapours from the insulating fluid. In the example of Fig. 5, the signal is reflected directly from the surface 512, although in other examples an element floating in the insulating fluid 511 may be used to aid reflection.

The sensor 550 is powered by a toroidal transformer 552 that draws power from a cable extending from the termination device 500 and that forms part of the cable connection 540. The sensor 550 transmits its measurements wirelessly to a controller, such as controller 120 for analysis and determination of the level.

In Fig. 3, the distance between the sensor 350 and the reflecting surface, which in Fig. 3 is a lower surface of the element 360, will decrease as the level 310 of the insulating fluid lowers due to a leak. In Fig. 5, in contrast, the distance between the sensor 550 and the reflecting surface, which in Fig. 5 is the surface 512 of the insulating fluid 511, will increase as the level 510 of the insulating fluid 511 lowers due to a leak.

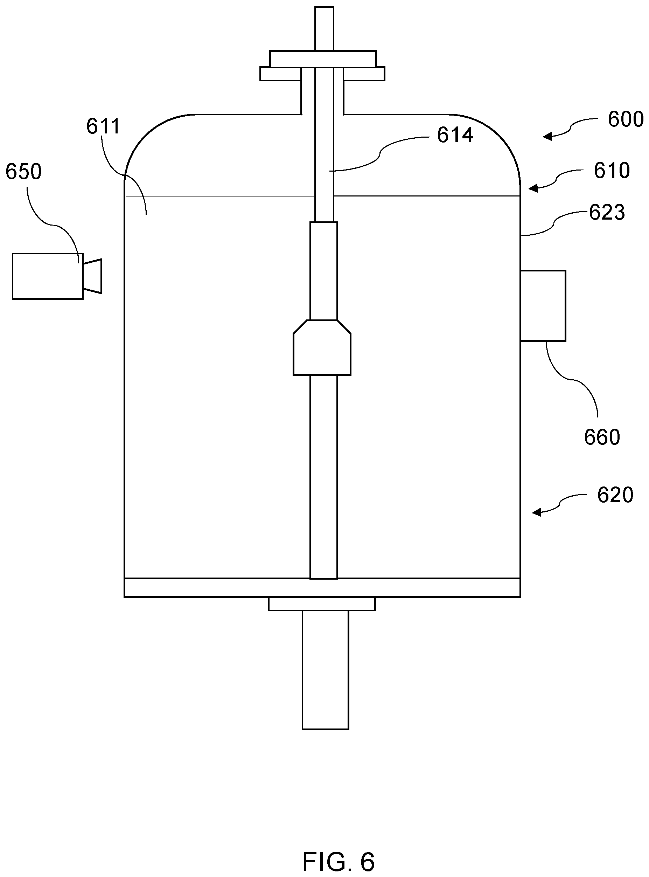

Fig. 6 shows a yet further arrangement, including a termination device 600 and two sensors 650, 660. The termination device 600 has the same features as the termination devices in Figs. 3 and 5. In examples, only one of the sensors 650, 660 may be provided. A first sensor, sensor 650 is a thermal camera. The thermal camera 650 is directed towards a side 623 of the termination device 600. The thermal camera 650 is configured to obtain images of the outside of the termination device 600. A temperature of a housing 620 of the termination device 600 will vary depending on where the level of the insulating fluid is. A temperature of a region of the housing 620 that is in contact with the insulation fluid 611 will be different to a temperature of a region of the housing 620 that is not in contact with the insulation fluid 611. In other words, parts of the housing above the level 610 of the insulating fluid 611 will be a different temperature to parts of the housing 620 below the level 610 due to differences in the heat-conducting properties of vapour and insulating fluid.

The second sensor 660 is a vibration sensor. The vibration sensor 650 in this example is attached to a side 623 of the housing 620, but in other examples may be attached to other parts of the housing 620. The vibration sensor 650 is configured to measure a vibrational parameter of the termination device 600, which is a natural or resonant frequency. An amount of insulating fluid 611 within the termination device 600 may change the natural frequency. The vibration sensor 650 may output a vibration signal to the housing 620 and measure a response to determine the natural or resonant frequency. Based on the measured natural or resonant frequency, a controller may determine the level 610 of the insulating fluid.

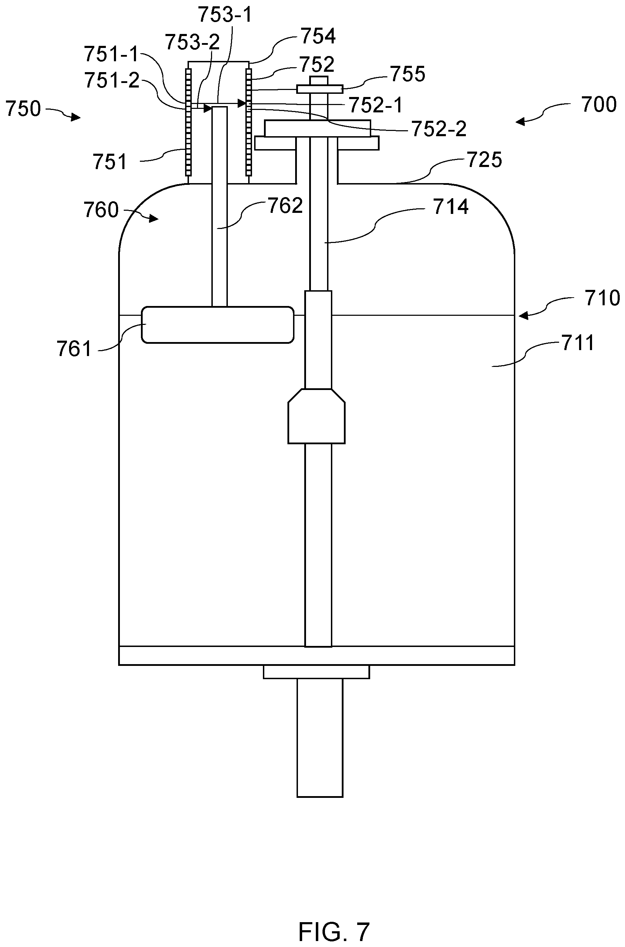

Fig. 7 shows a further arrangement of a termination device 700, a sensor 750, and an element 760 arranged to float in an insulating fluid 711 within the termination device 700. The termination device 700 has the same features as the termination devices in the earlier figures.

The sensor 750 comprises a plurality of emitting devices 751 and a plurality of corresponding receiving devices 752. The emitting devices 751 and receiving devices 752 are mounted within a body or housing 754 provided outside of the termination device 700. The body or housing 754 is mounted to a top plate 725 of the termination device 700. The emitting devices 751 emit a signal which is subsequently received by a corresponding receiving device 752. The sensor 750 is powered by a toroidal transformer 755 attached to a cable of the cable connection 714 that extends through the termination device 700.

The element 760 is configured to break or interrupt at least some of the signals from the emitting devices 751 from reaching their corresponding receiving devices 752. The element 760 has a lower portion 761, which sits and floats within the insulating fluid 711 and an upper portion 762 that extends from the lower portion 761 into the housing 754 of the sensor 750. A valve may be provided between the top plate 725 and the housing 754. The element 760 is formed from a dielectric material.

The element 760 floats within the insulating fluid 711, and therefore a position of the element 760 changes as a level 710 of the insulating fluid 711 changes. Particularly, a position of the upper portion 762 of the element 760 changes within the housing 754 of the sensor 750, thereby interrupting a different number of signals emitted by the signal emitters 751. From a number of signals that are interrupted, a level of the insulating fluid can be determined. The sensor 750 may undergo a calibration process during installation to determine a correspondence between the level of the upper portion 762 and a level 710 of the insulating fluid 711.

By way of example, in Fig. 7, the level 710 of the insulating fluid 711 is lower than in the other termination devices depicted in other figures, and is lower than a normal level. Thus, there has been a change in the level 710 of the insulating fluid, and this may indicate a leak. As a result, the floating element 760 is also lower than when the insulating fluid 711 is at its normal level when there is no leak. This means that some of the signals emitted by the emitting devices 751 are reaching their corresponding receiving devices 752. Particularly, the upper portion 762 of the floating element has lowered so that a signal 753-1 emitted by a first emitting device 751-1 is reaching its corresponding receiving device 752-1, while a signal 753-2 emitted by a second emitting device 751-2, immediately beneath the first emitting device 751-1, is being prevented from reaching its corresponding receiving device 752-2. Accordingly, an insulating fluid level corresponding to the first emitting device 751-1 may be determined by a controller, based on it being the lowest emitting device whose signal is not being interrupted by the element 760.

In other examples, such a sensor may include emitting and receiving devices on the same side, and a level of the insulating fluid may be determined based on reflections of signals from the element 760.

In some examples, such a sensor may include emitting and receiving devices that read a positional coding or encoding embedded on or provided on a surface of the element 760. The coding may comprise a pattern or scale. The scale may be a combined scale, including more than one type of coding. For example, the scale may include an incremental scale and an absolute scale.

## Claims

1. A system (100) for monitoring leakage of an insulating fluid from a termination device (10) of a high voltage cable connection (14), the system (100) comprising:
a sensor (110) arranged to measure a parameter of the termination device (10); and
a controller (120) configured to:
receive (115; 202) at least one measurement of the parameter of the termination device (10) from the sensor (110);
**characterized in that**
the controller (120) is further configured to:
determine (125; 204) a level (312) of the insulating fluid within the termination device (10) based on the at least one measurement at a first time and a second time that is different to the first time; and
determine (214) a rate of change of the level of the insulating fluid based at least in part on the level of the insulating fluid at the first time and the level of the insulating fluid at the second time.

2. The system (100) of claim 1, wherein the controller (120) is configured to:
determine (206) that the level (312) of the insulating fluid is below a threshold level; and at least one of:
transmit (208) a signal for informing an operator;
cause (210) a power flow through the cable (14) to be interrupted; or
cause (212) insulating fluid to be automatically supplied into the termination device (10).

3. The system (100) of claim 1, wherein the controller (120) is configured to:
determine (216) a future time at which the level (312) of the insulating fluid will be below a threshold level based on the rate of change of the level of the insulating fluid.

4. The system (100) of any preceding claim, wherein the controller (120) is configured to:
determine (218) that the rate of change of the level of the insulating fluid is above a threshold rate of change; and at least one of:
transmit (208) a signal for alerting an operator;
cause (210) a power flow through the cable (14) to be interrupted; or
cause (212) insulating fluid to be automatically supplied into the termination device (10).

5. The system (100) of any preceding claim, wherein the sensor (110) is an active sensor.

6. The system (100) of any preceding claim, wherein the sensor (110) is configured to emit a signal and receive a reflection of the signal from a surface (312) of the insulating fluid for measuring the parameter.

7. The system (100) of any of claims 1 to 5, comprising an element (360) configured to float in the insulating fluid, wherein the element (360) is for use by the sensor (110) for measuring the parameter.

8. The system (100) of any preceding claim, wherein the sensor (110) is configured to emit a signal comprising at least one of:
an acoustic signal;
a radio wave signal;
a laser signal; or
a visible light signal.

9. The system (100) of any preceding claim, wherein the sensor (110) is configured to emit a vibration signal into a body (320) of the termination device (10) for measuring the parameter.

10. The system (100) of any preceding claim, wherein the sensor (110) is configured to measure a thermal characteristic of the termination device (10) for measuring the parameter.

11. A termination device (10) comprising the system of any preceding claim.

12. The termination device (10) of claim 11, having a base plate (324), wherein the sensor (110) is mounted to the base plate (324).

13. The termination device (10) of claim 11, comprising a top plate (325), wherein the sensor (110) is mounted to the top plate (325).

14. A method (200) for monitoring a leakage of an insulating fluid from a termination device (10) of a high voltage cable connection (14), the method (200) comprising:
receiving (115; 202) at least one measurement of a parameter of the termination device (10) from a sensor (110); the method being **characterized by**:
determining (125; 204) a level (312) of the insulating fluid within the termination device (10) based on the at least one measurement at a first time and a second time that is different to the first time; and
determining (214) a rate of change of the level of the insulating fluid based at least in part on the level of the insulating fluid at the first time and the level of the insulating fluid at the second time.

## Patentansprüche

1. System (100) zum Überwachen einer Leckage eines Isolierfluids aus einer Endverschlussvorrichtung (10) einer Hochspannungskabelverbindung (14), wobei das System (100) Folgendes umfasst:
einen Sensor (110), der angeordnet ist, um einen Parameter der Endverschlussvorrichtung (10) zu messen; und
eine Steuerung (120), die zu Folgendem konfiguriert ist:
Empfangen (115; 202) mindestens einer Messung des Parameters der Endverschlussvorrichtung (10) von dem Sensor (110); und
**dadurch gekennzeichnet, dass**
die Steuerung (120) ferner zu Folgendem konfiguriert ist:
basierend auf der mindestens einen Messung zu einem ersten Zeitpunkt und einem zweiten Zeitpunkt, der sich von dem ersten Zeitpunkt unterscheidet, Bestimmen (125; 204) eines Stands (312) des Isolierfluids innerhalb der Endverschlussvorrichtung (10); und
Bestimmen (214) einer Änderungsrate des Stands des Isolierfluids basierend mindestens teilweise auf dem Stand des Isolierfluids zu dem ersten Zeitpunkt und dem Stand des Isolierfluids zu dem zweiten Zeitpunkt.

2. System (100) nach Anspruch 1, wobei die Steuerung (120) zu Folgendem konfiguriert ist:
Bestimmen (206), dass der Stand (312) des Isolierfluids unter einem Schwellenstand liegt; und mindestens eines von Folgenden:
Übertragen (208) eines Signals zum Informieren eines Bedieners;
Veranlassen (210), dass ein Leistungsfluss durch das Kabel (14) unterbrochen wird; oder
Veranlassen (212), dass automatisch Isolierfluid in die Endverschlussvorrichtung (10) zugeführt wird.

3. System (100) nach Anspruch 1, wobei die Steuerung (120) zu Folgendem konfiguriert ist:
basierend auf der Änderungsrate des Stands des Isolierfluids, Bestimmen (216) eines zukünftigen Zeitpunkts, zu dem der Stand (312) des Isolierfluids unter einem Schwellenstand liegen wird.

4. System (100) nach einem vorhergehenden Anspruch, wobei die Steuerung (120) zu Folgendem konfiguriert ist:
Bestimmen (218), dass die Änderungsrate des Stands des Isolierfluids über einer Schwellenänderungsrate liegt; und mindestens eines von Folgenden:
Übertragen (208) eines Signals zum Warnen eines Bedieners;
Veranlassen (210), dass ein Leistungsfluss durch das Kabel (14) unterbrochen wird; oder
Veranlassen (212), dass automatisch Isolierfluid in die Endverschlussvorrichtung (10) zugeführt wird.

5. System (100) nach einem vorhergehenden Anspruch, wobei der Sensor (110) ein aktiver Sensor ist.

6. System (100) nach einem vorhergehenden Anspruch, wobei der Sensor (110) dazu konfiguriert ist, ein Signal zu emittieren und eine Reflexion des Signals von einer Oberfläche (312) des Isolierfluids zum Messen des Parameters zu empfangen.

7. System (100) nach einem der Ansprüche 1 bis 5, umfassend ein Element (360), das dazu konfiguriert ist, in dem Isolierfluid zu schwimmen, wobei das Element (360) zur Verwendung durch den Sensor (110) zum Messen des Parameters dient.

8. System (100) nach einem vorhergehenden Anspruch, wobei der Sensor (110) dazu konfiguriert ist, ein Signal zu emittieren, das mindestens eines von Folgendem umfasst:
ein akustisches Signal;
ein Funkwellensignal;
ein Lasersignal; oder
ein sichtbares Lichtsignal.

9. System (100) nach einem vorhergehenden Anspruch, wobei der Sensor (110) dazu konfiguriert ist, ein Vibrationssignal in einen Körper (320) der Endverschlussvorrichtung (10) zum Messen des Parameters zu emittieren.

10. System (100) nach einem vorhergehenden Anspruch, wobei der Sensor (110) dazu konfiguriert ist, eine thermische Eigenschaft der Endverschlussvorrichtung (10) zum Messen des Parameters zu messen.

11. Endverschlussvorrichtung (10), umfassend das System nach einem vorhergehenden Anspruch.

12. Endverschlussvorrichtung (10) nach Anspruch 11, die eine Grundplatte (324) aufweist, wobei der Sensor (110) an der Grundplatte (324) montiert ist.

13. Endverschlussvorrichtung (10) nach Anspruch 11, umfassend eine obere Platte (325), wobei der Sensor (110) an der oberen Platte (325) montiert ist.

14. Verfahren (200) zum Überwachen einer Leckage eines Isolierfluids aus einer Endverschlussvorrichtung (10) einer Hochspannungskabelverbindung (14), wobei das Verfahren (200) Folgendes umfasst:
Empfangen (115; 202) mindestens einer Messung eines Parameters der Endverschlussvorrichtung (10) von einem Sensor (110); wobei das Verfahren **gekennzeichnet ist durch**:
basierend auf der mindestens einen Messung zu einem ersten Zeitpunkt und einem zweiten Zeitpunkt, der sich von dem ersten Zeitpunkt unterscheidet, Bestimmen (125; 204) eines Stands (312) des Isolierfluids innerhalb der Endverschlussvorrichtung (10); und
Bestimmen (214) einer Änderungsrate des Stands des Isolierfluids basierend mindestens teilweise auf dem Stand des Isolierfluids zu dem ersten Zeitpunkt und dem Stand des Isolierfluids zu dem zweiten Zeitpunkt.

## Revendications

1. Système (100) pour surveiller une fuite d'un fluide isolant à partir d'un dispositif de terminaison (10) d'une connexion de câble à haute tension (14), le système (100) comprenant :
un capteur (110) agencé pour mesurer un paramètre du dispositif de terminaison (10) ; et
un dispositif de commande (120) configuré pour :
recevoir (115 ; 202) au moins une mesure du paramètre du dispositif de terminaison (10) en provenance du capteur (110) ;
**caractérisé en ce que**
le dispositif de commande (120) est en outre configuré pour :
déterminer (125 ; 204) un niveau (312) du fluide isolant à l'intérieur du dispositif de terminaison (10) sur la base de l'au moins une mesure à un premier instant et à un second instant qui est différent du premier instant ; et
déterminer (214) un taux de changement du niveau du fluide isolant sur la base au moins en partie du niveau du fluide isolant au premier instant et du niveau du fluide isolant au second instant.

2. Système (100) de la revendication 1, ledit dispositif de commande (120) étant configuré pour :
déterminer (206) que le niveau (312) du fluide isolant est inférieur à un niveau seuil ; et au moins un parmi :
transmettre (208) un signal pour informer un opérateur ;
entraîner (210) une interruption du flux de puissance à travers le câble (14) ; ou
entraîner (212) la fourniture automatique de fluide isolant dans le dispositif de terminaison (10).

3. Système (100) de la revendication 1, ledit dispositif de commande (120) étant configuré pour :
déterminer (216) un instant futur auquel le niveau (312) du fluide isolant sera inférieur à un niveau seuil sur la base du taux de changement du niveau du fluide isolant.

4. Système (100) d'une quelconque revendication précédente, ledit dispositif de commande (120) étant configuré pour :
déterminer (218) que le taux de changement du niveau du fluide isolant est supérieur à un taux de changement seuil ; et au moins un parmi :
transmettre (208) un signal pour alerter un opérateur ;
entraîner (210) une interruption du flux de puissance à travers le câble (14) ; ou
entraîner (212) la fourniture automatique de fluide isolant dans le dispositif de terminaison (10).

5. Système (100) d'une quelconque revendication précédente, ledit capteur (110) étant un capteur actif.

6. Système (100) d'une quelconque revendication précédente, ledit capteur (110) étant configuré pour émettre un signal et recevoir une réflexion du signal en provenance d'une surface (312) du fluide isolant pour mesurer le paramètre.

7. Système (100) de l'une quelconque des revendications 1 à 5, comprenant un élément (360) configuré pour flotter dans le fluide isolant, ledit élément (360) étant destiné à être utilisé par le capteur (110) pour mesurer le paramètre.

8. Système (100) d'une quelconque revendication précédente, ledit capteur (110) étant configuré pour émettre un signal comprenant au moins un parmi :
un signal acoustique ;
un signal d'onde radio ;
un signal laser ; ou
un signal de lumière visible.

9. Système (100) d'une quelconque revendication précédente, ledit capteur (110) étant configuré pour émettre un signal de vibration dans un corps (320) du dispositif de terminaison (10) en vue de la mesure du paramètre.

10. Système (100) d'une quelconque revendication précédente, ledit capteur (110) étant configuré pour mesurer une caractéristique thermique du dispositif de terminaison (10) en vue de la mesure du paramètre.

11. Dispositif de terminaison (10) comprenant le système d'une quelconque revendication précédente.

12. Dispositif de terminaison (10) de la revendication 11, possédant une plaque de base (324), ledit capteur (110) étant monté sur la plaque de base (324).

13. Dispositif de terminaison (10) de la revendication 11, comprenant une plaque supérieure (325), ledit capteur (110) étant monté sur la plaque supérieure (325).

14. Procédé (200) permettant la surveillance d'une fuite d'un fluide isolant à partir d'un dispositif de terminaison (10) d'une connexion de câble à haute tension (14), le procédé (200) comprenant :
la réception (115 ; 202) d'au moins une mesure d'un paramètre du dispositif de terminaison (10) en provenance d'un capteur (110) ; le procédé étant **caractérisé par** :
la détermination (125 ; 204) d'un niveau (312) du fluide isolant à l'intérieur du dispositif de terminaison (10) sur la base de l'au moins une mesure à un premier instant et à un second instant qui est différent du premier instant ; et
la détermination (214) un taux de changement du niveau du fluide isolant sur la base au moins en partie du niveau du fluide isolant au premier instant et du niveau du fluide isolant au second instant.
